# EUROPÄISCHE PATENTSCHRIFT

(11) **EP 4 029 727 B1**
(45) Veröffentlichungstag und Bekanntmachung des Hinweises auf die Patenterteilung: **12.06.2024**
(21) Anmeldenummer: 21151352.8
(22) Anmeldetag: 13.01.2021
(51) Int. Cl.: B60N 2/06, B60N 2/14, E01C 19/48

(54) **BAUMASCHINE MIT SITZKONSOLE**
CONSTRUCTION MACHINE WITH SEAT BRACKET
MACHINE DE CONSTRUCTION AVEC CONSOLE D'ASSISE

(43) Veröffentlichungstag der Anmeldung: 20.07.2022
(73) Patentinhaber: Joseph Vögele AG, 67067 Ludwigshafen (DE)
(72) Erfinder: BUSCHMANN, Martin, 67435 Neustadt (DE); WEISER, Ralf, 68526 Ladenburg (DE); THEOBALD, Maximilian, 69126 Heidelberg (DE)
(74) Vertreter: Grünecker Patent- und Rechtsanwälte PartG mbB

(56) Entgegenhaltungen:
- EP-A1- 3 150 449
- EP-A2- 1 839 934
- DE-A1-102015 012 560

## Beschreibung

Die vorliegende Erfindung betrifft einen Bedienstand einer Baumaschine, bei der es sich insbesondere um einen Straßenfertiger oder ein Beschickerfahrzeug handeln kann, mit einem verstellbaren Sitz.

Baumaschinen, insbesondere Straßenbaumaschinen wie Straßenfertiger oder Beschickerfahrzeuge, weisen in der Regel einen Bedienstand auf, auf dem ein Bedienpult zur Steuerung der Baumaschine und mindestens ein Fahrersitz angeordnet sind, und auf dem sich während des Betriebs ein oder mehrere Bediener bzw. Fahrer aufhalten. Zur besseren Übersicht und Koordination ist der Bedienstand oftmals offen, also nicht kabinenartig, ausgebildet, weist jedoch zum Wetterschutz ein Dach auf, welches den Bedienstand überspannt. Der Bedienstand befindet sich zumeist in erhöhter Position auf der Baumaschine und an den Seiten des Bedienstands sind üblicherweise Geländer, Gitter oder kombinierte Elemente mit Sicherheitsglas als Absturzsicherung angebracht. Für einen Bediener, welcher sich auf dem Bedienstand befindet, kann es sinnvoll sein, bei den jeweiligen unterschiedlichen Betriebsarten während des Arbeitsbetriebs auch unterschiedliche Standorte oder Sitzpositionen einzunehmen, um jeweils einen optimalen Überblick über das Geschehen zu haben. So kann es beispielsweise hilfreich sein, bei der Materialübergabe von einem LKW an den Straßenfertiger eine gute Sicht nach vorne zu haben, und beim Einbau des Straßenbelags mit sich ändernden Randabschnitten kann eine gute Sicht zur Seite auf die Einbaukante von Vorteil sein.

Bisherige Verstellmechanismen eines Fahrersitzes weisen nur begrenzte Verstellmöglichkeiten auf, so dass der Fahrer oftmals aus dem Sitz steigen musste und sich sogar seitlich über die Absturzsicherung lehnen musste.

Aus der DE102015012560A1 ist ein verstellbarer Sitz bekannt, welcher drehbar und entlang einer Achse verschiebbar an einem Schwenkarm gelagert ist, wobei der Schwenkarm an einer gegenüberliegenden Seite schwenkbar an einem Fahrstand gelagert ist. Aus der EP1839934A2 ist ein höhenverstellbarer und verschiebbarer Sitz bekannt. Aus der EP3150449A1 ist ein weiterer verschiebbarer Sitz bekannt.

Die Aufgabe der Erfindung ist es, eine Baumaschine mit einem Sitz mit verbesserten Verstellmöglichkeiten bereitzustellen.

Gelöst wird die Aufgabe durch eine Baumaschine mit den Merkmalen des Anspruchs 1. Vorteilhafte Weiterbildungen der Erfindung sind in den Unteransprüchen angegeben.

Ein erfindungsgemäßer Bedienstand einer Baumaschine, insbesondere eines Straßenfertigers oder eines Beschickerfahrzeugs, umfasst ein Strukturelement und eine Sitzkonsole, welche einen Konsolenboden und einen Sitz aufweist. Die Sitzkonsole weist einen Drehmechanismus auf, mit welchem der Sitz drehbar relativ zu dem Konsolenboden gelagert ist. Die Sitzkonsole weist einen ersten und einen zweiten linearen Verschiebemechanismus auf, mit welchem der Sitz in eine erste und eine zweite Richtung verschiebbar auf dem Konsolenboden gelagert ist. Die Sitzkonsole ist mittels eines Schwenkmechanismus an dem Strukturelement und relativ zu dem Strukturelement schwenkbar angelenkt.

Das Strukturelement kann beispielsweise eine vordere oder seitliche Wand des Bedienstands oder der Boden oder ein Teil des Bodens des Bedienstands sein. Ebenso kann das Strukturelement ein zusätzliches, insbesondere zur Verstärkung dienendes, Teil sein, welches beispielsweise an einer Innenwand des Bedienstands oder am Boden ausgebildet ist. Es kann auch ein im Wesentlichen vertikales Bauteil, wie beispielsweise eine eckige oder kreiszylindrische Säule, welche mit dem Boden oder einer Wand des Bedienstands verbunden ist, als Strukturelement vorgesehen sein.

Der Sitz kann nun in einer Ebene parallel zum Boden das Bedienstands in X- und Y-Richtung verschoben und somit optimal entsprechend einer jeweiligen Tätigkeit des Bedieners positioniert werden. So kann insbesondere durch die Verschiebbarkeit des Sitzes die Sitzposition in Abhängigkeit der Körpergröße des Bedieners so eingestellt werden, dass z.B. ein Bedienpult oder weitere Bedienelemente gut erreichbar sind. Die Dreheinrichtung ermöglicht das Rotieren des Sitzes um die Hochachse, wodurch insbesondere eine Sicht und Kommunikation zur Fertigerrückseite hin erleichtert wird. Durch die Schwenkbarkeit der Sitzkonsole kann insbesondere die Sicht nach vorne angepasst und damit verbessert werden.

In einer vorteilhaften Ausführungsform umfasst der erste lineare Verschiebemechanismus ein erstes Schienensystem und der zweite lineare Verschiebemechanismus ein zweites Schienensystem, wobei das erste und das zweite Schienensystem senkrecht zueinander angeordnet sind. Eine derartige Anordnung ist mechanisch stabil und es können alle Punkte innerhalb der maximalen Verschiebedistanzen erreicht werden. Üblicherweise sind die Schienensysteme übereinander angeordnet.

Zweckmäßig ist das erste Schienensystem parallel zu einer Längsachse des Bedienstands und damit zu einer Fahrtrichtung der Baumaschine angeordnet, wenn sich die schwenkbare Sitzkonsole in einer ersten Position befindet. Als "erste Position" kann beispielsweise eine nicht ausgeschwenkte Position bezeichnet werden. Somit kann durch das erste Schienensystem die Längsposition des Sitzes eingestellt werden und beispielsweise der Abstand zu einem Bedienpult, welches fest an einer vorderen Innenseite des Bedienstands angeordnet ist, eingestellt werden. Ergänzend kann durch das zweite Schienensystem eine Position des Sitzes in seitlicher Richtung verstellt werden, um bestimmte Elemente des Bedienpults, welche für eine jeweilige Tätigkeit wichtig sind, gut zu erreichen. Die hier als zweites Schienensystem bezeichnete Verstellung dient auch dazu, den Sitz möglichst nah an die seitliche Absturzsicherung (Geländer, Sicherheitsglas etc.) zu verfahren, sodass sich der Fahrer leicht über ebendiese lehnen kann und den vorderen Bereich des Fertigers und der Baustelle (Richtungsanzeiger, Materialübergabe, etc.) einsehen kann.

Idealerweise sind eine Drehachse des Drehmechanismus und eine Schwenkachse des Schwenkmechanismus versetzt voneinander angeordnet. So kann die Sitzkonsole als Ganzes geschwenkt werden und der Fahrersitz und damit die Blickrichtung des Bedieners unabhängig von der Position der Sitzkonsole eingestellt werden. So kann beispielsweise die Blickrichtung in Fahrtrichtung beibehalten werden.

Zweckmäßig ist der erste und/oder der zweite Verschiebemechanismus und/oder der Drehmechanismus und/oder der Schwenkmechanismus jeweils zumindest in einer Position arretierbar. Dazu kann ein Arretiermechanismus vorgesehen sein, welcher manuell, beispielsweise mittels eines Hebels gelöst, werden kann.

In einer bevorzugten Variante ist die Sitzkonsole relativ zu dem Strukturelement in einem Bereich von 0 bis 45 Grad schwenkbar. Denkbar wäre auch ein seitliches Ausschwenken bis zu 90 Grad.

In einer weiteren Variante ist der Drehmechanismus derart angeordnet, dass sich seine Drehachse versetzt von dem Mittelpunkt des Sitzes befindet, so dass dieser exzentrisch drehbar gelagert ist. So können seitliche Elemente eines Bedienpults gut erreicht werden. Zusätzlich könnte das Bedienpult bogenförmig um den Sitz angeordnet sein. Zudem kann ein Auf- und Abssitzen auf den Sitz weiterhin gut möglich sein, da ein ausreichender Abstand zu den seitlichen Elementen des Bedienpults bleiben kann.

In einer vorteilhaften Variante umfasst die Sitzkonsole ein Bedienpult. Somit kann die Sitzkonsole inklusive des Bedienpults geschwenkt werden und der Bediener auf dem Sitz kann die Bedienelemente zur Maschinensteuerung unverändert gut erreichen. Es ist jedoch denkbar, dass das Bedienpult fest an einem Element des Bedienstands oder separat von der Sitzkonsole drehbar an einem Element des Bedienstands angeordnet ist. Ebenso kann das Bedienpult drehbar an der Sitzkonsole angeordnet sein.

In einer zweckmäßigen Variante weist der Konsolenboden zwei oder mehrere Ebenen auf, welche in zueinander unterschiedlicher Höhe angeordnet sind. Beispielsweise kann der Sitz inklusive des ersten und zweiten Verschiebemechanismus und des Drehmechanismus auf einer Erhöhung des Konsolenbodens angeordnet sein. So ist eine ausreichende Beinfreiheit nach unten für den Bediener vorhanden ist, wenn dieser seine Füße auf einer niedrigeren Ebene abstellen kann.

In einer weiteren Ausführungsform weist der Konsolenboden eine zumindest einseitig sich von einem hinteren Ende der Sitzkonsole zu dem Schwenkmechanismus hin verjüngende Form auf. Die Ausmaße des Konsolenbodens können also auf ein für die mechanische Stabilität nötiges Minimum begrenzt werden. So wird einerseits Material gespart und der Bereich des Bodens des Bedienstands, welcher von dem Konsolenboden überdeckt wird, bzw. von diesem beim Schwenken überstrichen wird, ist minimiert. So können die freien Bereiche für andere Funktionselemente des Bedienstands vorgesehen werden. Außerdem werden auf dem Bedienstand befindliche Personen bei einem Schwenkvorgang weniger gestört.

Idealerweise ist die Sitzkonsole in einer hinteren Hälfte frei schwebend ausgebildet. Es sind also in einem hinteren Bereich keine Rollen, Gleitschienen oder ähnliches als Lager vorgesehen. Insbesondere kann die Sitzkonsole ausschließlich in dem Schwenkmechanismus gelagert sein. So wird Material eingespart und der Herstellungsaufwand reduziert. Zusätzlich wird eine Verletzungsgefahr beim Schwenken reduziert.

Vorzugsweise ist der Schwenkmechanismus derart angeordnet, dass die Sitzkonsole zumindest teilweise nach außen über eine Außenkante eines Bodens des Bedienstands schwenkbar ist. So kann die Sicht des Bedieners nach vorne, nach hinten und auch zur Seite auf die Einbaukante deutlich verbessert werden. Insbesondere der Blick nach vorne, vorbei an Karosserieteilen, wird verbessert. Insbesondere muss der Fahrer nicht mehr aufstehen und sich nach außen aus dem Bedienstand lehnen.

In einer bevorzugten Ausführungsform ist an der Sitzkonsole eine im Wesentlichen vertikale Wandstruktur ausgebildet, welche als seitliche Begrenzung des Bedienstands vorgesehen ist. Diese Wandstruktur, welche als Absturzsicherung dient, ist mit der Sitzkonsole schwenkbar. Die Wandstruktur ist idealerweise so gestaltet und angeordnet, dass sie einen Teil der übrigen Absturzsicherung des Bedienstands darstellt, wenn die Sitzkonsole nicht ausgeschwenkt ist, also mit der übrigen Absturzsicherung bündig ausgerichtet ist. Auch wenn die Sitzkonsole nach außen geschwenkt wird erfüllt die Wandstruktur weiterhin den Zweck der Absturzsicherung. Die Wandstruktur kann ein Gitter, ein Geländer, eine Sicherheitsglasscheibe, ein Kunststoffelement oder dergleichen oder Kombinationen davon sein. Es ist denkbar, dass die Wandstruktur zusätzlich an einem Strukturelement des Bedienstands angelenkt ist.

In einer zweckmäßigen Variante ist wenigstens für einen von dem ersten oder zweiten Verschiebemechanismus, dem Drehmechanismus, oder dem Schwenkmechanismus ein Motorantrieb vorgesehen. So kann die jeweilige Einstellung komfortabel ohne Kraftaufwand vorgenommen werden. Dazu können entsprechende Bedienelemente, wie Knöpfe oder Tasten, an dem Sitz, an dem Bedienpult oder an anderer Stelle vorgesehen sein.

In einer bevorzugten Variante ist wenigstens eine der Einstellungen des ersten oder zweiten Verschiebemechanismus oder des Drehmechanismus oder des Schwenkmechanismus automatisch einstellbar. Es kann eine Position eines einzelnen Verstellmechanismus beispielsweise per einmaligem oder mehrmaligem Knopfdruck oder durch Einstellung an einem Display oder Ähnlichem ausgewählt werden. Ebenso kann eine Kombination von Positionen von mehreren Verstellmechanismen mit einem Knopfdruck oder einer Auswahl in einem Bedienmenü eingestellt werden. Beispielsweise kann als auswählbare Voreinstellung gespeichert sein, dass die Sitzkonsole maximal nach außen geschwenkt und der Sitz maximal nach außen verschoben ist.

Im Folgenden werden Ausführungsbeispiele der Erfindung anhand der Figuren näher beschrieben. Dabei zeigen
Figur 1: eine schematische Draufsicht einer ersten Ausführungsform eines Bedienstands mit ausgeschwenkter Sitzkonsole mit Bedienpult,
Figur 2: eine schematische Draufsicht auf eine Sitzkonsole ohne Bedienpult einer zweiten Ausführungsform eines Bedienstands,
Figur 3: eine perspektivische Seitenansicht auf einen Sitz einer dritten Ausführungsform eines Bedienstands,
Figur 4: eine perspektivische Seitenansicht auf eine Sitzkonsole einer vierten Ausführungsform eines Bedienstands.

Einander entsprechende Komponenten sind in den Figuren jeweils mit gleichen Bezugszeichen versehen.

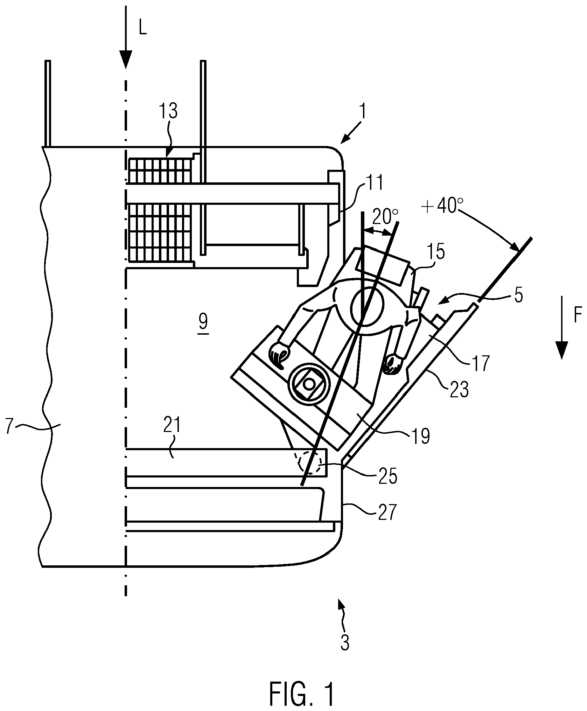

Figur 1 zeigt eine schematische Draufsicht einer ersten Ausführungsform eines Bedienstands 1 einer Baumaschine 3, beispielsweise eines Straßenfertigers, mit ausgeschwenkter Sitzkonsole 5. Der Bedienstand 1 wird von einem Dach 7, welches in der linken Hälfte der Abbildung dargestellt ist, überdeckt. Der Bedienstand 1 weist einen Boden 9 und seitliche Begrenzungen 11 in Form eines Gitters, einer Wand, eines Geländers oder dergleichen zur Absturzsicherung auf. In einem hinteren Bereich des Bedienstands 1 ist üblicherweise ein Aufgang 13 zum Betreten des Bedienstands 1 vorhanden. Die Sitzkonsole 5 umfasst einen Sitz 15, einen Konsolenboden 17 und in dieser Ausführungsform ein Bedienpult 19 zum Steuern der Maschinenfunktionen, wobei in anderen Ausführungsformen das Bedienpult 19 auch fest an einer Vorderseite 21 des Bedienstands 1 verbaut sein kann, so dass sich das Bedienpult 19 nicht mit der Sitzkonsole 5 schwenkt. Ebenso könnte das Bedienpult 19 separat von der Sitzkonsole 5 drehbar an einem Element des Bedienstands 1 angeordnet sein. Die Sitzkonsole 5 umfasst in dieser Ausführungsform eine Wandstruktur 23, welche ebenso wie die seitlichen Begrenzungen 11 als Absturzsicherung dient und zwar sowohl im gezeigten ausgeschwenkten Zustand also auch wenn die Sitzkonsole 5 sich in einem nicht geschwenkten Zustand, also im Wesentlichen parallel zur Fahrtrichtung F bzw. einer Längsachse L des Bedienstands 1 befindet.

In dieser Ausführungsform ist die Sitzkonsole 5 derart seitlich mittels eines Schwenkmechanismus 25 an einem Strukturelement des Bedienstands 1 angelenkt, dass sie nach außen, über eine Außenkante 27 des Bodens 9 des Bedienstands 1 ausgeschwenkt werden kann. Durch die Drehbarkeit des Sitzes 15 kann jedoch der Fahrer zwar seitlich versetzt aber parallel zur Fahrtrichtung sitzen und ungestört von vorderen Karosserieteilen der Baumaschine 3 nach vorne blicken, um beispielsweise einen Beladevorgang zu überwachen. In dieser Darstellung ist die Sitzkonsole um ca. 40 Grad nach außen geschwenkt und der Sitz 15 so gedreht, dass er sich in einer Rotation von ca. 20 Grad zur Fahrtrichtung F befindet. Zweckmäßig ist die Sitzkonsole 5 so gestaltet, dass ihre Wandstruktur 23 bündig mit der übrigen seitlichen Begrenzung 11 abschließt, wenn die Sitzkonsole 5 sich in der nicht-geschwenkten Position also parallel zur Fahrtrichtung F bzw. 0 Grad ausgeschwenkt befindet.

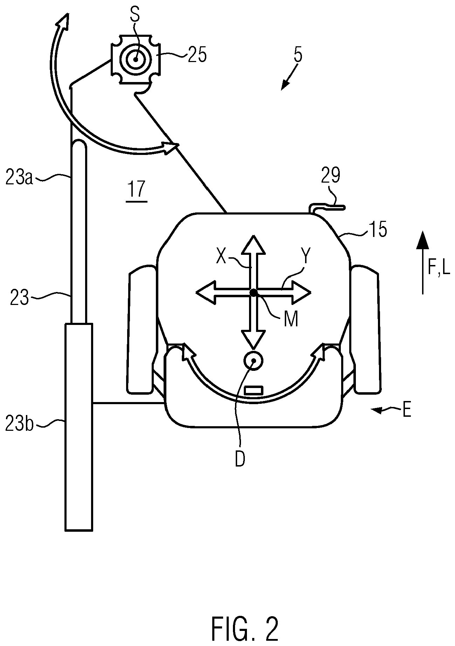

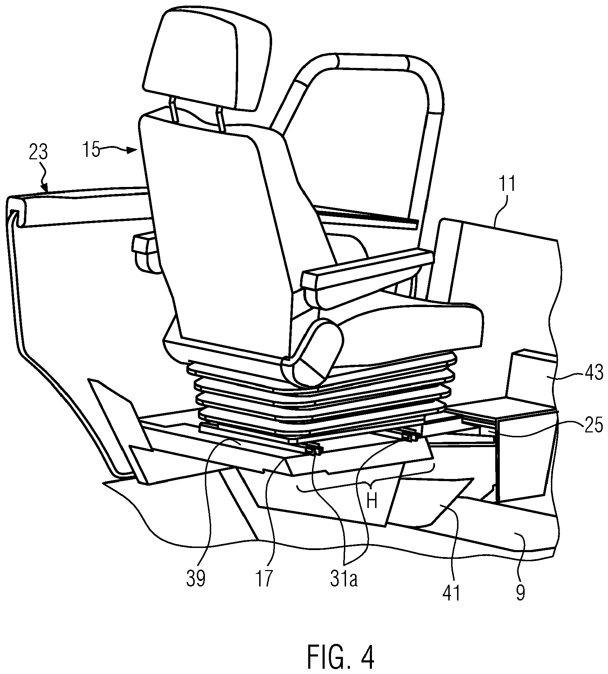

Figur 2 zeigt eine schematische Draufsicht auf eine Sitzkonsole 5 ohne Bedienpult 19 in einer zweiten Ausführungsform eines Bedienstands 1. Der Konsolenboden 17 ist an einer rechten Seite der Sitzkonsole 5 von, in Fahrtrichtung F gesehen, einem hinteren Ende E der Sitzkonsole 5 nach vorne zu dem Schwenkmechanismus 25 hin sich verjüngend ausgebildet. Die Wandstruktur 23 kann unterschiedliche Bereiche umfassen, beispielsweise einen vorderen Bereich 23a, welcher als stabile Scheibe aus Sicherheitsglas oder Kunststoff ausgebildet ist, und einen hinteren Bereich 23b, welcher als Stahlgeländer ausgebildet ist. Die verschiedenen Elemente können auch in anderer Anordnung kombiniert werden, wie beispielsweise in Figur 4 gezeigt ist. Die Sitzkonsole ist mittels des Schwenkmechanismus 25 um eine Schwenkachse S schwenkbar. Der Sitz 15 ist um eine Drehachse D drehbar und über einen ersten und zweiten linearen Verschiebemechanismus in einer ersten Richtung X und einer zweiten Richtung Y verschiebbar. Die Drehachse D ist von einem Mittelpunkt M des Sitzes 15 versetzt. Befindet sich die Sitzkonsole 5 wie in der gezeigten Abbildung in einer nicht geschwenkten, ersten Position, so ist die erste Richtung X im Wesentlichen parallel zur Fahrtrichtung F bzw. Längsachse L des Bedienstands 1 und die zweite Richtung Y im Wesentlichen senkrecht dazu. Sofern die Verschiebungen oder die Drehung des Sitzes 15 nicht jeweils durch einen Motorantrieb, beispielsweise einen Elektromotor, erfolgen, können ein oder mehrere Hebel 29 vorgesehen sein, mit welchen der Bediener eine jeweilige Arretierung der Verschiebe- oder Drehmechanismen lösen kann, um dann die Sitzposition zu ändern. Ebenso kann jedoch auch beispielsweise eine Drehung stets möglich sein, ohne eine Arretierung lösen zu müssen.

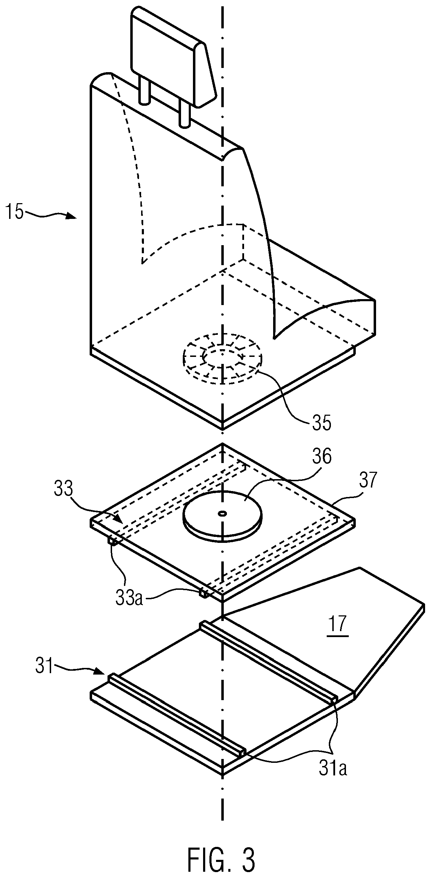

Figur 3 zeigt eine perspektivische Seitenansicht als Explosionszeichnung auf einen Sitz 15 einer dritten Ausführungsform eines Bedienstands 1. Auf dem Konsolenboden 17 ist ein erster linearer Verschiebemechanismus 31 in Form eines ersten Schienensystems 31a angeordnet. Damit ist ein zweiter Verschiebemechanismus 33 in Form eines zweiten Schienensystems 33a verbunden. Ein Drehmechanismus 35 erlaubt das Drehen des Sitzes 15. Dazu kann ein Motorantrieb 36 vorgesehen sein, welcher derart angeordnet ist, um bei entsprechender Ansteuerung den Sitz 15 relativ zum Konsolenboden 17 zu drehen. Um die Verstellmechanismen 31, 33, 35 wie dargestellt miteinander zu kombinieren, kann eine Zwischenplatte 37 vorgesehen sein. Die Schienensysteme 31a und 33a können direkt aufeinander montiert werden, es kann jedoch auch noch eine weitere Zwischenplatte vorgesehen sein. Die Verschiebemechanismen 31, 33 umfassen jeweils ein Schienensystem 31a, 33a welche jeweils wiederum zwei untere Schienenteile und zwei obere Schienenteile umfassen. Der Übersichtlichkeit halber sind hier nur jeweils zwei lineare Elemente pro Verschiebemechanismus 31, 33 gezeigt.

Figur 4 zeigt eine perspektivische Seitenansicht auf eine Sitzkonsole 5 einer vierten Ausführungsform eines Bedienstands 1. In dieser Ausführungsform weist der Konsolenboden 17 eine erste Ebene 39 und eine zweite Ebene 41 auf, welche in unterschiedlicher Höhe angeordnet sind. Der Sitz 15 ist über das erste Schienensystem 31a auf der erhöhten Ebene 39 angeordnet. Wie zu erkennen ist, sind jeweils zwei lineare Elemente des Schienensystems 31a auf der Ebene 39 fest montiert und zwei lineare Elemente sind an dem übrigen Sitzaufbau montiert, wobei die Elemente gegeneinander verschiebbar gelagert sind. Die Wandstruktur 23 ist als Scheibe mit einer oberen Einfassung gestaltet. Der Schwenkmechanismus 25 ist an einem Strukturelement 43 angelenkt, so dass die Sitzkonsole 5 relativ zu diesem schwenkbar ist. Das Strukturelement 43 kann eine vordere Wand des Bedienstands 1 oder eine vergleichbare im Wesentlichen vertikale Struktur sein. Ebenso kann das Strukturelement 43 ein Teil des Bodens 9 des Bedienstands 1 sein, so dass der Schwenkmechanismus 25 direkt auf dem Boden 9 montiert ist. Ebenso können jedoch auch andere Anordnungen vorgesehen sein. In dieser Ausführungsform ist zu erkennen, dass eine hintere Hälfte H der Sitzkonsole 5 frei schwebend ist. Die erhöhte Ebene 39 des Konsolenbodens 17 ist in diesem Beispiel mit der Wandstruktur 23 in dem hinteren Abschnitt verbunden. Die Lagerung der Sitzkonsole 5 und damit die Einleitung der Gewichtskraft der Sitzkonsole 5 und eines sich darauf befindlichen Bedieners in die übrige Struktur des Bedienstands 1 erfolgt jedoch in diesem Beispiel nur über den Schwenkmechanismus 25.

Ausgehend von den oben dargestellten Ausführungsformen eines Bedienstands 1 mit einer Sitzkonsole 5 sind vielerlei Variation desselben möglich. So wäre es denkbar, an dem hinteren Ende E der Sitzkonsole 5 eine ausfaltbare, ausziehbare oder schwenkbare Verstrebung anzubringen, so dass auch dort eine Absturzsicherung vorhanden ist. Diese Verstrebung, beispielsweise eine teleskopartige Stange, könnte dabei mit der seitlichen Begrenzung 11 des Bedienstands 1 und der Wandstruktur 23 der Sitzkonsole 5 verbunden sein. Des Weiteren wäre es möglich, falls der Drehmechanismus 35 und der Schwenkmechanismus 25 motorisch angetrieben sind, bei einem Ausschwenken der Sitzkonsole 5 den Sitz 15 automatisch so nachzuführen, dass dieser stets parallel zur Längsachse L ausgerichtet ist, die Blickrichtung des Fahrers also nach vorne zeigt. Zusätzlich kann auch eine Höhenverstellung des Sitzes 15 sowie weitere Komfortelemente wie Federung, Polsterhärteverstellung, Sitzheizung und dergleichen für den Sitz 15 vorgesehen sein.

## Patentansprüche

1. Baumaschine (3), insbesondere Straßenfertiger oder Beschickerfahrzeug, umfassend einen Bedienstand (1), welcher ein Strukturelement (43) und eine Sitzkonsole (5) umfasst, wobei die Sitzkonsole (5) einen Sitz (15) aufweist und mittels eines Schwenkmechanismus (25) an dem Strukturelement (43) und relativ zu dem Strukturelement (43) schwenkbar angelenkt ist, **dadurch gekennzeichnet, dass** die Sitzkonsole (5) einen Konsolenboden (17) und einen Drehmechanismus (35) aufweist, mit welchem der Sitz (15) drehbar relativ zu dem Konsolenboden (17) gelagert ist, und die Sitzkonsole (5) einen ersten und einen zweiten linearen Verschiebemechanismus (31, 33) aufweist, mit welchem der Sitz (15) in eine erste und eine zweite Richtung (X, Y) verschiebbar auf dem Konsolenboden (17) gelagert ist.

2. Baumaschine nach Anspruch 1, **dadurch gekennzeichnet, dass** der erste lineare Verschiebemechanismus (31) ein erstes Schienensystem (31a) umfasst und der zweite lineare Verschiebemechanismus (33) ein zweites Schienensystem (33a) umfasst, wobei das erste und das zweite Schienensystem (31a, 33a) senkrecht zueinander angeordnet sind.

3. Baumaschine nach Anspruch 2, **dadurch gekennzeichnet, dass** das erste Schienensystem (31a) parallel zu einer Längsachse (L) des Bedienstands (1) und damit zu einer Fahrtrichtung (F) der Baumaschine (3) angeordnet ist, wenn sich die schwenkbare Sitzkonsole (5) in einer ersten Position befindet.

4. Baumaschine nach einem der vorangegangenen Ansprüche, **dadurch gekennzeichnet, dass** eine Drehachse (D) des Drehmechanismus (35) und eine Schwenkachse (S) des Schwenkmechanismus (25) versetzt voneinander angeordnet sind.

5. Baumaschine nach einem der vorangegangenen Ansprüche, **dadurch gekennzeichnet, dass** die Sitzkonsole (5) relativ zu dem Strukturelement (43) in einem Bereich von 0 bis 45 Grad schwenkbar ist.

6. Baumaschine nach einem der vorangegangenen Ansprüche, **dadurch gekennzeichnet, dass** der Drehmechanismus (35) derart angeordnet ist, dass sich seine Drehachse (D) versetzt von dem Mittelpunkt (M) des Sitzes (15) befindet, so dass dieser exzentrisch drehbar gelagert ist.

7. Baumaschine nach einem der vorangegangenen Ansprüche, **dadurch gekennzeichnet, dass** die Sitzkonsole (5) ein Bedienpult (19) umfasst.

8. Baumaschine nach einem der vorangegangenen Ansprüche, **dadurch gekennzeichnet, dass** der Konsolenboden (17) zwei oder mehrere Ebenen (39, 41) aufweist, welche in zueinander unterschiedlicher Höhe angeordnet sind.

9. Baumaschine nach einem der vorangegangenen Ansprüche, **dadurch gekennzeichnet, dass** der Konsolenboden (17) eine zumindest einseitig sich von einem hinteren Ende (E) der Sitzkonsole (5) zu dem Schwenkmechanismus (25) hin verjüngende Form aufweist.

10. Baumaschine nach einem der vorangegangenen Ansprüche, **dadurch gekennzeichnet, dass** die Sitzkonsole (5) in einer hinteren Hälfte (H) frei schwebend ausgebildet ist.

11. Baumaschine nach einem der vorangegangenen Ansprüche, **dadurch gekennzeichnet, dass** der Schwenkmechanismus (25) derart angeordnet ist, dass die Sitzkonsole (5) zumindest teilweise nach außen über eine Außenkante (27) eines Bodens (9) des Bedienstands (1) schwenkbar ist.

12. Baumaschine nach einem der vorangegangenen Ansprüche, **dadurch gekennzeichnet, dass** an der Sitzkonsole (5) eine im Wesentlichen vertikale Wandstruktur (23) ausgebildet ist, welche als seitliche Begrenzung des Bedienstands (1) vorgesehen ist.

13. Baumaschine nach einem der vorangegangenen Ansprüche, **dadurch gekennzeichnet, dass** wenigstens für einen von dem ersten oder zweiten Verschiebemechanismus (31, 33), dem Drehmechanismus (35), oder dem Schwenkmechanismus (25) ein Motorantrieb 36 vorgesehen ist.

14. Baumaschine nach Anspruch 13, **dadurch gekennzeichnet, dass** wenigstens eine der Einstellungen des ersten oder zweiten Verschiebemechanismus (31, 33) oder des Drehmechanismus (35) oder des Schwenkmechanismus (25) automatisch einstellbar ist.

## Claims

1. Construction machine (3), in particular road finishing machine or feeder vehicle, comprising a control platform (1) that comprises a structural element (43) and a seat console (5), wherein the seat console (5) includes a seat (15) and is hinged to the structural element (43) by means of a swivel mechanism (25) to be swivable relative to the structural element (43), **characterized in that** the seat console (5) includes a console bottom (17) and a rotary mechanism (35) by which the seat (15) is mounted to be rotatable relative to the console bottom (17), and the seat console (5) includes a first and a second linear shifting mechanism (31, 33) by which the seat (15) is mounted on the console bottom (17) to be shiftable into a first and a second direction (X, Y).

2. Construction machine according to claim 1, **characterized in that** the first linear shifting mechanism (31) comprises a first rail system (31a), and the second linear shifting mechanism (33) comprises a second rail system (33a), the first and the second rail systems (31a, 33a) being arranged perpendicularly with respect to each other.

3. Construction machine according to claim 2, **characterized in that** the first rail system (31a) is arranged in parallel to a longitudinal axis (L) of the control platform (1) and thus to a direction of travel (F) of the construction machine (3) when the swivable seat console (5) is in a first position.

4. Construction machine according to one of the preceding claims, **characterized in that** an axis of rotation (D) of the rotary mechanism (35) and a swivel axis (S) of the swivel mechanism (25) are arranged offset with respect to each other.

5. Construction machine according to one of the preceding claims, **characterized in that** the seat console (5) is swivable relative to the structural element (43) within a range of 0 to 45 degrees.

6. Construction machine according to one of the preceding claims, **characterized in that** the rotary mechanism (35) is arranged such that its axis of rotation (D) is located offset from the center (M) of the seat (15), so that it is mounted to be eccentrically rotatable.

7. Construction machine according to one of the preceding claims, **characterized in that** the seat console (5) comprises a control panel (19).

8. Construction machine according to one of the preceding claims, **characterized in that** the console bottom (17) includes two or more levels (39, 41) which are arranged at different heights with respect to each other.

9. Construction machine according to one of the preceding claims, **characterized in that** the console bottom (17) has a shape tapering at least on one side from a rear end (E) of the seat console (5) to the swivel mechanism (25).

10. Construction machine according to one of the preceding claims, **characterized in that** the seat console (5) is embodied to be freely suspended in a rear half (H).

11. Construction machine according to one of the preceding claims, **characterized in that** the swivel mechanism (25) is arranged such that the seat console (5) is at least partially swivable to the outside over an outer edge (27) of a bottom (9) of the control platform (1).

12. Construction machine according to one of the preceding claims, **characterized in that** an essentially vertical wall structure (23) is embodied at the seat console (5) which is provided as a lateral delimitation of the control platform (1).

13. Construction machine according to one of the preceding claims, **characterized in that** at least for one of the first or second shifting mechanism (31, 33), the rotary mechanism (35) or the swivel mechanism (25) a motor drive (36) is provided.

14. Construction machine according to claim 13, **characterized in that** at least one of the settings of the first or second shifting mechanism (31, 33) or of the rotary mechanism (35), or of the swivel mechanism (25) can be automatically adjusted.

## Revendications

1. Machine de chantier (3), en particulier finisseur routier ou véhicule de chargement, comprenant un poste de commande (1) qui comprend un élément de structure (43) et une console de siège (5), dans laquelle la console de siège (5) présente un siège (15) et est articulée de manière pivotante au niveau de l'élément de structure (43) et par rapport à l'élément de structure (43) au moyen d'un mécanisme de pivotement (25), **caractérisée en ce que** la console de siège (5) présente un fond de console (17) et un mécanisme de rotation (35) grâce auquel le siège (15) est monté de manière à pouvoir tourner par rapport au fond de console (17), et la console de siège (5) présente des premier et second mécanismes de déplacement linéaire (31, 33) grâce auxquels le siège (15) est monté sur le fond de console (17) de manière à pouvoir coulisser dans des première et seconde directions (X, Y).

2. Machine de chantier selon la revendication 1, **caractérisée en ce que** le premier mécanisme de déplacement linéaire (31) comprend un premier système de rails (31a) et le second mécanisme de déplacement linéaire (33) comprend un second système de rails (33a), dans laquelle les premier et second systèmes de rails (31a, 33a) sont agencés perpendiculairement l'un à l'autre.

3. Machine de chantier selon la revendication 2, **caractérisée en ce que** le premier système de rails (31a) est agencé parallèlement à un axe longitudinal (L) du poste de commande (1) et donc à une direction de déplacement (F) de la machine de chantier (3) lorsque la console de siège (5) pivotante se trouve dans une première position.

4. Machine de chantier selon l'une quelconque des revendications précédentes, **caractérisée en ce qu'**un axe de rotation (D) du mécanisme de rotation (35) et un axe de pivotement (S) du mécanisme de pivotement (25) sont agencés de manière décalée l'un par rapport à l'autre.

5. Machine de chantier selon l'une quelconque des revendications précédentes, **caractérisée en ce que** la console de siège (5) peut pivoter par rapport à l'élément de structure (43) dans une plage comprise entre 0 et 45 degrés.

6. Machine de chantier selon l'une quelconque des revendications précédentes, **caractérisée en ce que** le mécanisme de rotation (35) est agencé de telle manière que son axe de rotation (D) est décalé par rapport au centre (M) du siège (15), de sorte que ledit siège est monté de manière à pouvoir tourner de manière excentrée.

7. Machine de chantier selon l'une quelconque des revendications précédentes, **caractérisée en ce que** la console de siège (5) comprend un panneau de commande (19).

8. Machine de chantier selon l'une quelconque des revendications précédentes, **caractérisée en ce que** le fond de console (17) présente deux ou plus de deux niveaux (39, 41) agencés à des hauteurs différentes l'un par rapport à l'autre.

9. Machine de chantier selon l'une quelconque des revendications précédentes, **caractérisée en ce que** le fond de console (17) présente une forme qui se rétrécit au moins d'un côté à partir d'une extrémité arrière (E) de la console de siège (5) vers le mécanisme de pivotement (25).

10. Machine de chantier selon l'une quelconque des revendications précédentes, **caractérisée en ce que** la console de siège (5) est conçue pour flotter librement au sein d'une moitié arrière (H).

11. Machine de chantier selon l'une quelconque des revendications précédentes, **caractérisée en ce que** le mécanisme de pivotement (25) est agencé de telle manière que la console de siège (5) peut pivoter au moins partiellement vers l'extérieur au-dessus d'un bord extérieur (27) d'un fond (9) du poste de commande (1).

12. Machine de chantier selon l'une quelconque des revendications précédentes, **caractérisée en ce qu'**une structure de paroi (23) essentiellement verticale et faisant office de délimitation latérale du poste de commande (1) est formée au niveau de la console de siège (5).

13. Machine de chantier selon l'une quelconque des revendications précédentes, **caractérisée en ce qu'**un entraînement motorisé (36) est fourni au moins pour un parmi : le premier ou le second mécanisme de déplacement (31, 33), le mécanisme de rotation (35) ou le mécanisme de pivotement (25).

14. Machine de chantier selon la revendication 13, **caractérisée en ce qu'**au moins un des réglages du premier ou du second mécanisme de déplacement (31, 33) ou du mécanisme de rotation (35) ou du mécanisme de pivotement (25) peut être ajusté de manière automatique.
